# EUROPEAN PATENT APPLICATION

(11) **EP 3 093 091 A1**
(43) Date of publication of application: **16.11.2016**
(21) Application number: 16156285.5
(22) Date of filing: 18.02.2016
(51) Int. Cl.: B23C 5/20, B23B 27/14, B23F 21/12

(54) **CUTTING TOOL ASSEMBLY AND METHOD OF MANUFACTURE**

(30) Priority: 15.05.2015 US 201514713268
(71) Applicant: ArvinMeritor Technology, LLC, Troy, MI 48084 (US)
(72) Inventor: Masseth, John, Brighton, MI Michigan 48116 (US)
(74) Representative: Jones, John Bryn

(57) **Abstract**

A cutting tool assembly and a method of manufacture. The cutting tool assembly may include a backing member (32) made of a first material and a cutting member (34) made of a second material. The second material may differ from the first material. The cutting member (34) may be fixedly disposed on the backing member (32).

## Description

### TECHNICAL FIELD

This patent application relates to a cutting tool assembly and a method of manufacture.

### BACKGROUND

A bevel gear cutting tool with cutter bars is disclosed in U.S. Patent No. 8,454,275.

### SUMMARY

In at least one embodiment, a cutting tool assembly is provided. The cutting tool assembly may include a backing member and a cutting member. The backing member may be made of a first material and may include a first surface, a second surface, a first end surface, and a second end surface. The first surface may be disposed opposite the second surface. The first end surface may extend from the first surface to the second surface. The second end surface may be disposed opposite the first end surface and may extend from the first surface to the second surface. The cutting member may be fixedly disposed on the backing member. The cutting member may be made of a second material that differs from the first material and may include a first cutting member surface, a second cutting member surface, a first cutting member end surface, and a second cutting member end surface. The first cutting member surface may be disposed opposite the second cutting member surface. The second cutting member surface may be disposed proximate the second surface. The first cutting member end surface may extend from the first cutting member surface to the second cutting member surface. The second cutting member end surface may be disposed opposite the first cutting member end surface and may extend from the first cutting member surface to the second cutting member surface.

In at least one embodiment, a method of making a cutting tool assembly is provided. The method may include providing a backing member made of steel and providing a cutting member made of tungsten carbide. The backing member may include a first surface, a second surface, a first end surface, and a second end surface. The first surface may be disposed opposite the second surface. The first end surface may extend from the first surface to the second surface. The second end surface may extend from the first surface to the second surface. The cutting member may include a first cutting member surface, a second cutting member surface, a first cutting member end surface, and a second cutting member end surface. The first cutting member end surface may be disposed opposite the second cutting member surface. The first cutting member end surface may extend from the first cutting member surface to the second cutting member surface. The second cutting member end surface may be disposed opposite the first cutting member end surface and may extend from the first cutting member surface to the second cutting member surface. The cutting member may be positioned on the backing member such that second cutting member surface is disposed proximate the second surface. The cutting member may be joined to the backing member such that the cutting member is fixedly positioned with respect to the backing member. A thickness of the backing member from the first surface to the second surface may be greater than a thickness of the cutting member from the first cutting member surface to the second cutting member surface.

### BRIEF DESCRIPTION OF THE DRAWINGS

Figure 1 is a perspective view of a gear cutting assembly.
Figures 2A-2C are top, side, and end views of a first embodiment of a cutting tool assembly.
Figures 3A-3C are top, side, and end views of a second embodiment of a cutting tool assembly.
Figures 4A-4C are top, side, and end views of a third embodiment of a cutting tool assembly.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Vehicles may include a drive axle and/or an axle housing that may include gear sets employing bevel gears or hypoid gears. The gear sets may connect an automotive driveshaft to a differential or a transfer case. The bevel gears may be configured as a straight bevel gear, spiral bevel gear, or a hypoid bevel gear.

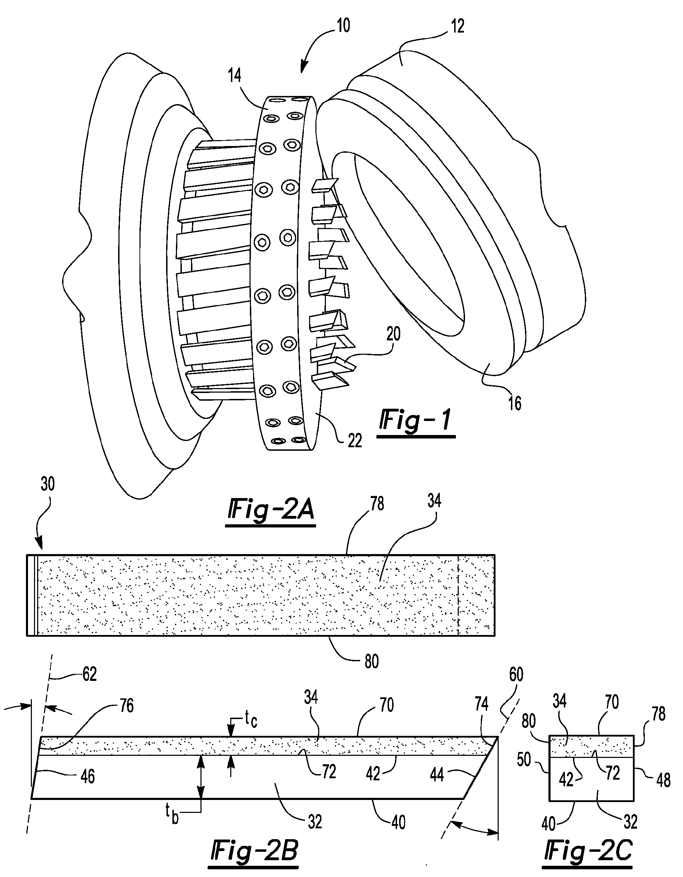

Referring to Figure 1, a gear cutting system 10 may be provided to machine a bevel gear or hypoid gear, such as a ring gear or a pinion, by a face milling or face hobbing process. The gear cutting system 10 may include a securing member 12 and a gear cutting head or a gear cutting tool 14. The securing member 12 may be configured to retain a body to be machined with a gear tooth profile to form a ring gear 16. The securing member 12 may translate relative to the rotating gear cutting tool 14 to form the ring gear 16 during the machining process.

The gear cutting tool 14 may be provided with a plurality of cutting tools 20. The plurality of cutting tools 20 may engage the body to generate the flanks of a particular slot or groove to form the gear teeth or gear tooth profile of the ring gear 16. Should a face milling process be employed, each cutting tool 20 may be received within a blade retaining feature or corresponding hole that may be provided in a face 22 of the gear cutting tool 14. The blade retaining feature may be a plurality of slots or holes that may be arranged about an axis and may be provided in a generally circular configuration. Each cutting tool 20 may be radially equidistant from the center of the gear cutting tool 14. One or more set screws may be provided in the gear cutting tool 14 to retain and secure a corresponding cutting tool 20.

Should a face hobbing process be employed, each cutting tool 20 may be received within the blade retaining feature having a plurality of offset slots. The plurality of offset slots may be arranged such that each cutting tool 20 may be radially offset from an adjacent cutting tool. The cutting tools 20 may be arranged in a repeating pattern such that pairs of cutting tools 20 may be positioned in a repeating pattern such that a first cutting tool is disposed closer to the center of the gear cutting tool 14 than the adjacent cutting tool. As such, cutting tools may be positioned in an alternating pattern between positions that are disposed closer to the axis and then further from the axis.

The face hobbing process may be a wet hobbing process that may apply coolant to the gear cutting system 10 to cool the gear cutting tool 14 and/or the ring gear 16. In at least one embodiment, a wet hobbing process may employ cutting speeds less than a dry hobbing processdue to the heat generated during the machining process and the smoke point of the coolant employed. The face hobbing process may also be a dry hobbing process that may not use coolant to cool the gear cutting tool 14 and/or the ring gear 16. Dry hobbing processes may be performed at faster cutting speedsas compared to the dry hobbing process.

Each cutting tool 20 may be configured as a bar-shaped cutter, a form blade, or a stick style blade. The faces of the cutting tool 20 may be sharpened with a desired profile suitable for the specific type of gear to be machined. The cutting tool 20 may be sharpened with a gear cutting profile. The gear cutting profile may be a profile configured to cut grooves or slots into the ring gear 16 to form a hypoid or bevel ring gear.

A cutting tool that is a one-piece body made of a single material, such as high-speed steel may wear faster than a cutting tool that is made of a harder material like tungsten carbide, which may lead to more frequent sharpening. In addition, a high-speed steel cutting tool may not be suitable for use without coolant in some applications. A cutting tool that is made only of a harder material like tungsten carbide may be more expensive than a softer material like high-speed steel, but may wear more slowly and may be suitable for use without coolant. A cutting tool assembly 30 may replace a one piece cutting tool and may provide the benefits associated with tungsten carbide at a lower cost than a tool that is made solely of tungsten carbide. The cutting tool assembly 30 may be the cutting tool 20 prior to sharpening with the gear cutting profile. As such, a sharpened cutting tool assembly 30 may be referred to as a cutting tool 20.

Referring to Figures 2A-2C, a first embodiment of a cutting tool assembly 30 is shown. The cutting tool assembly 30 may include a backing member 32 and a cutting member 34.

The backing member 32 may be made of a first material, such as high-speed steel. For instance, the backing member 32 may be made of high-speed steel that may have a density of 7.8-8.1 g/cm³ and a hardness on the Rockwell C scale or Rockwell C hardness (HRC) of at least 68 HRC. Exemplary high-speed steel material compositions by weight percentage may include 2.0-2.3% carbon, 4.0-4.2% chromium, 5.0-6.5% vanadium, 6.5-10.0% tungsten, 5.0-7.0% molybdenum, 9.0-10.5% cobalt, and 0.12% sulfur, with the remainder being iron and/or trace elements. The backing member 32 may include a first surface 40, a second surface 42, a first end surface 44, a second end surface 46. a first side surface 48, and a second side surface 50.

The first surface 40 may form an exterior surface of the cutting tool assembly 30 and may be spaced apart from and may not engage the cutting member 34. The first surface 40 may be substantially planar.

The second surface 42 may be disposed opposite the first surface 40. The second surface 42 may be substantially planar and may be disposed substantially parallel to the first surface 40. As shown in Figure 2B, the backing member 32 may have a thickness t_{b} that may extend from the first surface 40 to the second surface 42.

The first end surface 44 may extend from the first surface 40 to the second surface 42 and may extend from the first side surface 48 to the second side surface 50. The first end surface 44 may be disposed at a non-perpendicular angle with respect to the first surface 40 and/or the second surface 42. In addition, the first end surface 44 may be substantially planar and may be substantially or completely disposed in a first plane 60.

The second end surface 46 may be disposed opposite the first end surface 44. The second end surface 46 may extend from the first surface 40 to the second surface 42 and may extend from the first side surface 48 to the second side surface 50. In addition, the second end surface 46 may be disposed at a non-perpendicular angle with respect to the first surface 40, the second surface 42, and/or the first end surface 44. The second end surface 46 may be substantially planar and may be substantially or completely disposed in a second plane 62. The second plane 62 may be disposed in a nonparallel relationship with the first plane 60.

The first side surface 48 may extend from the first surface 40 to the second surface 42. In addition, the first side surface 48 may be disposed substantially perpendicular to the first surface 40 and/or the second surface 42. The first side surface 48 may be substantially planar in one or more embodiments.

The second side surface 50 may be disposed opposite the first side surface 48. The second side surface 50 may extend from the first surface 40 to the second surface 42. In addition, the second side surface 50 may be disposed substantially perpendicular to the first surface 40 and/or the second surface 42. The second side surface 50 may be substantially planar and may be disposed substantially parallel to the first side surface 48 in one or more embodiments.

The cutting member 34 may be made of a second material that differs from the first material. For example, the second material may be solid tungsten carbide that may have a density of 13.84-15.7 g/cm³ and a hardness of at least 70 HRC. Exemplary solid tungsten carbide material compositions by weight percentage may include 6-10% cobalt, 85-95.5% tungsten-carbon, and 0-1% trace elements. The cutting member 34 may be fixedly disposed on the backing member 32. For example, the cutting member 34 may be joined to the backing member 32 by a joining method such as brazing, laser welding, welding, or the like. The cutting member 34 may include a first cutting member surface 70, a second cutting member surface 72, a first cutting member end surface 74, a second cutting member end surface 76, a first cutting member side surface 78, and a second cutting member side surface 80.

The first cutting member surface 70 may form an exterior surface of the cutting tool assembly 30 and may be spaced apart from and may not engage the backing member 32. The first cutting member surface 70 may be substantially planar.

The second cutting member surface 72 may be disposed opposite the first cutting member surface 70. The first cutting member surface 70 may be substantially planar and may be disposed substantially parallel to the second cutting member surface 72. As is best shown in Figure 2B, the cutting member 34 may have a thickness t_{c} that may extend from the first cutting member surface 70 to the second cutting member surface 72. The backing member thickness t_{b} may be greater than the cutting member thickness t_{c}. In at least one embodiment, the cutting member thickness t_{c} may be greater than the backing member thickness t_{b}. The second cutting member surface 72 may be disposed proximate and may engage the second surface 42 of the backing member 32. In at least one embodiment, the second cutting member surface 72 may continuously engage the second surface 42 from the first cutting member end surface 74 to the second cutting member end surface 76.

The first cutting member end surface 74 may extend from the first cutting member surface 70 the second cutting member surface 72 and may extend from the first cutting member side surface 78 to the second cutting member side surface 80. The first cutting member end surface 74 may be disposed at a non-perpendicular angle with respect to the first cutting member surface 70 and/or the second cutting member surface 72. In addition, the first cutting member end surface 74 may be substantially planar and may be substantially or completely disposed in the first plane 60.

The second cutting member end surface 76 may be disposed opposite the first cutting member end surface 74. The second cutting member end surface 76 may extend from the first cutting member surface 70 to the second cutting member surface 72 and may extend from the first cutting member side surface 78 to the second cutting member side surface 80. In addition, the second cutting member end surface 76 may be disposed at a non-perpendicular angle with respect to the first cutting member surface 70, the second cutting member surface 72, and/or the first cutting member end surface 74. The second cutting member end surface 76 may be substantially planar and may be substantially or completely disposed in the second plane 62.

The first cutting member side surface 78 may extend from the first cutting member surface 70 to the second cutting member surface 72 and may extend from the first cutting member end surface 74 to the second cutting member end surface 76. In addition, the first cutting member side surface 78 may be disposed substantially perpendicular to the first cutting member surface 70 and/or the second cutting member surface 72. The first cutting member side surface 78 may be substantially planar in one or more embodiments.

The second cutting member side surface 80 may be disposed opposite the first cutting member side surface 78. The second cutting member side surface 80 may extend from the first cutting member surface 70 to the second cutting member surface 72 and may extend from the first cutting member end surface 74 to the second cutting member end surface 76. In addition, the second cutting member side surface 80 may be disposed substantially perpendicular to the first cutting member surface 70 and/or the second cutting member surface 72. The second cutting member side surface 80 may be substantially planar and may be disposed substantially parallel to the first cutting member side surface 78 in one or more embodiments.

The cutting tool assembly 30 may be manufactured by providing a backing member 32 and a cutting member 34 as previously described. The backing member 32 and the cutting member 34 may be positioned such that the second cutting member surface 72 is disposed proximate or engages the second surface 42. The backing member 32 and the cutting member 34 may then be joined such that the cutting member 34 is fixedly positioned with respect to the backing member 32.

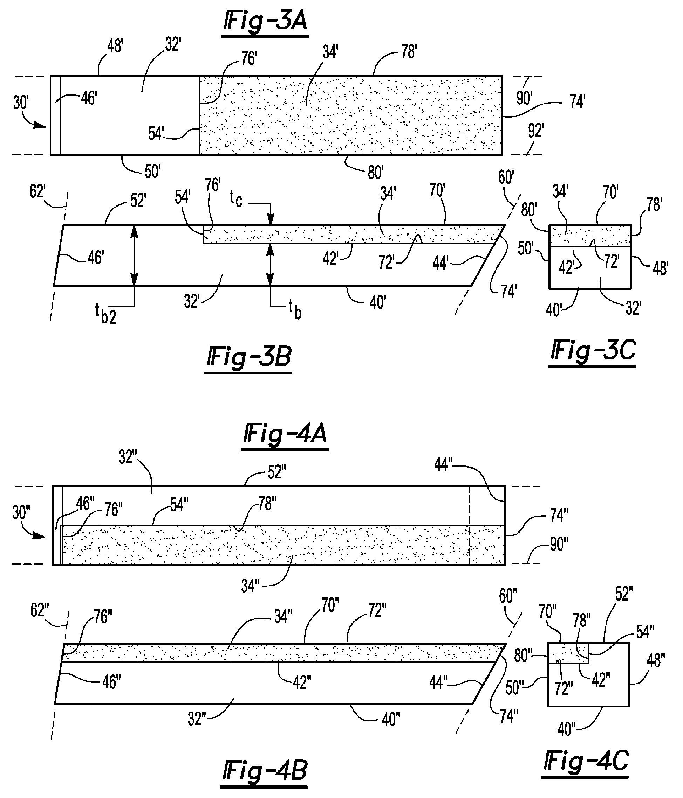

Referring to Figures 3A-3C, a second embodiment of a cutting tool assembly 30' is shown. Similar reference numbers are used in Figures 3A-3C to reference features that may be similar to those shown in Figures 2A-2C. The cutting tool assembly 30' may include a backing member 32'and a cutting member 34'.

The backing member 32' may be made of a first material, such as a high-speed steel as previously described. The backing member 32' may include a first surface 40', a second surface 42', a first end surface 44', a second end surface 46', a first side surface 48', a second side surface 50', a third surface 52', and a step surface 54'.

The first surface 40' may form an exterior surface of the cutting tool assembly 30' and may be spaced apart from and may not engage the cutting member 34'. The first surface 40' may be substantially planar.

The second surface 42' may be disposed opposite the first surface 40'. The second surface 42' may be substantially planar and may be disposed substantially parallel to the first surface 40'. As is best shown in Figure 3B, the backing member 32' may have a thickness t_{b} that may extend from the first surface 40 to the second surface 42'.

The first end surface 44' may extend from the first surface 40' to the second surface 42' and may extend from the first side surface 48' to the second side surface 50'. The first end surface 44' may be disposed at a non-perpendicular angle with respect to the first surface 40' and/or the second surface 42'. In addition, the first end surface 44' may be substantially planar and may be substantially or completely disposed in a first plane 60'.

The second end surface 46' may be disposed opposite the first end surface 44'. The second end surface 46' may extend from the first surface 40' to the third surface 52' and may extend from the first side surface 48' to the second side surface 50'. In addition, the second end surface 46' may be disposed at a non-perpendicular angle with respect to the first surface 40', the second surface 42', and/or the first end surface 44'. The second end surface 46' may be substantially planar and may be substantially or completely disposed in a second plane 62'. The second plane 62' may be disposed in a nonparallel relationship with the first plane 60'.

The first side surface 48' may extend from the first surface 40' to the second surface 42' and a portion of the first side surface 48 may extend from the first surface 40' to the third surface 52'. In addition, the first side surface 48' may be disposed substantially perpendicular to the first surface 40', the second surface 42', and/or the third surface 52'. The first side surface 48' may be substantially planar in one or more embodiments.

The second side surface 50' may be disposed opposite the first side surface 48'. The second side surface 50' may extend from the first surface 40' to the second surface 42' and a portion of the first side surface 48 may extend from the first surface 40' to the third surface 52'. In addition, the second side surface 50' may be disposed substantially perpendicular to the first surface 40' and/or the second surface 42'. The second side surface 50' may be substantially planar and may be disposed substantially parallel to the first side surface 48' in one or more embodiments.

The third surface 52' may form an exterior surface of the cutting tool assembly 30'. The third surface 52' may be disposed opposite the first surface 40'. In addition, the third surface 52' may be spaced apart from the second surface 42'. The third surface 52' may be substantially planar and may be disposed substantially parallel to the first surface 40' and/or the second surface 42'. The third surface 52' may be disposed at a non-perpendicular angle with respect to the first end surface 44' and/or the second end surface 46'. In addition, the third surface 52' may be disposed in a non-perpendicular relationship with the first plane 60' and/or the second plane 62'. The backing member 32' may have a thickness t_{b2} extending from the first surface 40' to the third surface 52'. The thickness t_{b2} may be greater than thickness t_{b} and thickness t_{c}.

The step surface 54' may extend from the second surface 42' to the third surface 52' and may extend from the first side surface 48' to the second side surface 50'. In addition, the step surface 54' may extend substantially perpendicular with respect to the second surface 42' and/or the third surface 52'. The step surface 54' may be disposed between and may be completely spaced apart from the first end surface 44' and the second end surface 46'.

The cutting member 34' may be made of a second material that differs from the first material. For example, the second material may be solid tungsten carbide as previously described. The cutting member 34' may be fixedly disposed on the backing member 32'. The cutting member 34' may include a first cutting member surface 70', a second cutting member surface 72', a first cutting member end surface 74', a second cutting member end surface 76', a first cutting member side surface 78', and a second cutting member side surface 80'.

The first cutting member surface 70' may form an exterior surface of the cutting tool assembly 30' and may be spaced apart from and may not engage the backing member 32'. The first cutting member surface 70' may be substantially planar.

The second cutting member surface 72' may be disposed opposite the first cutting member surface 70'. The second cutting member surface 72' may be substantially planar and may be disposed substantially parallel to the first cutting member surface 70'. As is best shown in Figure 3B, the cutting member 34' may have a thickness t_{c} that may extend from the first cutting member surface 70' to the second cutting member surface 72'. The backing member thickness t_{b} may be greater than the cutting member thickness t_{c}. The second cutting member surface 72' may be disposed proximate and may engage the second surface 42' of the backing member 32'. In at least one embodiment, the second cutting member surface 72' may continuously engage the second surface 42' from the first cutting member end surface 74' to the second cutting member end surface 76'.

The first cutting member end surface 74' may extend from the first cutting member surface 70' to the second cutting member surface 72' and from the first cutting member side surface 78' to the second cutting member side surface 80'. The first cutting member end surface 74' may be disposed at a non-perpendicular angle with respect to the first cutting member surface 70' and/or the second cutting member surface 72'. The first cutting member end surface 74' may be substantially planar and may be substantially or completely disposed in the first plane 60'. In addition, the first cutting member end surface 74' may be disposed opposite and may be spaced apart from the step surface 54'.

The second cutting member end surface 76' may be disposed opposite the first cutting member end surface 74'. The second cutting member end surface 76' may extend from the first cutting member surface 70' to the second cutting member surface 72' and from the first cutting member side surface 78' to the second cutting member side surface 80'. In addition, the second cutting member end surface 76' may be disposed at a substantially perpendicular angle with respect to the first cutting member surface 70' and/or the second cutting member surface 72' and at a non-perpendicular angle with respect to the first cutting member end surface 74'. The second cutting member end surface 76' may be substantially planar and may not be disposed in the second plane 62'. The second cutting member end surface 76' may engage the step surface 54'. In at least one embodiment, the step surface 54' may continuously engage the second cutting member end surface 76' from the first cutting member surface 70' to the second cutting member surface 72'.

The first cutting member side surface 78' may extend from the first cutting member surface 70' to the second cutting member surface 72'. In addition, the first cutting member side surface 78' may be disposed substantially perpendicular to the first cutting member surface 70' and/or the second cutting member surface 72'. The first cutting member side surface 78' may be substantially planar in one or more embodiments. The first cutting member side surface 78' and the first side surface 48' may be coplanar and may be disposed in a first side plane 90'.

The second cutting member side surface 80' may be disposed opposite the first cutting member side surface 78'. The second cutting member side surface 80' may extend from the first cutting member surface 70' to the second cutting member surface 72'. In addition, the second cutting member side surface 80' may be disposed substantially perpendicular to the first cutting member surface 70' and/or the second cutting member surface 72'. The second cutting member side surface 80' may be substantially planar and may be disposed substantially parallel to the first cutting member side surface 78' in one or more embodiments. The second cutting member side surface 80' and the second side surface 50' may be coplanar and may be disposed in a second side plane 92'. The second side plane 92' may be disposed substantially parallel to the first side plane 90'.

The cutting tool assembly 30' may be manufactured by providing a backing member 32' and a cutting member 34' as previously described. The backing member 32' and the cutting member 34' may be positioned such that the second cutting member surface 72' is disposed proximate or engages the second surface 42' and the step surface 54' is disposed proximate or engages the second cutting member end surface 76'. The backing member 32' and the cutting member 34' may then be joined such that the cutting member 34' is fixedly positioned with respect to the backing member 32'.

Figures 4A-4C, partial sectional views of an exemplary embodiment of a cutting tool assembly 30" are shown. Similar reference numbers are used in Figures 4A-4C to reference features that may be similar to those shown in Figures 3A-3C. The cutting tool assembly 30" may include a backing member 32" and a cutting member 34".

The backing member 32" may be made of a first material, such as a high-speed steel as previously described. The backing member 32" may include a first surface 40", a second surface 42", a first end surface 44", a second end surface 46", a first side surface 48", a second side surface 50", a third surface 52", and a step surface 54".

The first surface 40" may form an exterior surface of the cutting tool assembly 30" and may be spaced apart from and may not engage the cutting member 34". The first surface 40" may be substantially planar.

The second surface 42" may be disposed opposite the first surface 40". The second surface 42" may be substantially planar and may be disposed substantially parallel to the first surface 40". The backing member 32" may have a greater thickness than the cutting member 34" as previously described with respect to the embodiment shown in Figures 2A-2C.

The first end surface 44" may extend from the first surface 40" to the second surface 42" and from the first side surface 48" to the second side surface 50". In addition, a portion of the first end surface 44" may extend from the first side surface 48" to the step surface 54". The first end surface 44" may be disposed at a non-perpendicular angle with respect to the first surface 40" and/or the second surface 42". In addition, the first end surface 44" may be substantially planar and may be substantially or completely disposed in a first plane 60".

The second end surface 46" may be disposed opposite the first end surface 44". The second end surface 46" may extend from the first surface 40" to the second surface 42" and from the first side surface 48" to the second side surface 50". In addition, a portion of the second end surface 46" may extend from the first surface 40" to the third surface 52". The second end surface 46" may be disposed at a non-perpendicular angle with respect to the first surface 40", the second surface 42", the first end surface 44", and/or the third surface 52". The second end surface 46" may be substantially planar and may be substantially or completely disposed in a second plane 62". The second plane 62" may be disposed in a nonparallel relationship with the first plane 60".

The first side surface 48" may extend from the first surface 40" to the third surface 52". In addition, the first side surface 48" may be disposed substantially perpendicular to the first surface 40" and/or the third surface 52". The first side surface 48" may be substantially planar in one or more embodiments.

The second side surface 50" may be disposed opposite the first side surface 48". The second side surface 50" may extend from the first surface 40" to the second surface 42". In addition, the second side surface 50" may be disposed substantially perpendicular to the first surface 40 and/or the second surface 42". The second side surface 50" may be substantially planar and may be disposed substantially parallel to the first side surface 48" in one or more embodiments.

The third surface 52" may be disposed opposite the first surface 40". The third surface 52" may be disposed at a non-perpendicular angle with respect to the first end surface 44" and/or the second end surface 46". In addition, the third surface 52" may be substantially planar and may be disposed in a non-perpendicular relationship with the first plane 60" and/or the second plane 62". The third surface 52" may extend from the first end surface 44" to the second end surface 46" and from the first side surface 48" to the step surface 54".

The step surface 54" may extend from the second surface 42" to the third surface 52". In addition, the step surface 54" may extend from the first end surface 44" to the second end surface 46". The step surface 54" may extend substantially perpendicular with respect to the second surface 42" and the third surface 52". The step surface 54"may be disposed between and spaced apart from the first side surface 48" and the second side surface 50".

The cutting member 34" may be made of a second material that differs from the first material. For example, the cutting member 34" may be made of solid tungsten carbide as previously described. The cutting member 34" may be fixedly disposed on the backing member 32". The cutting member 34" may include a first cutting member surface 70", a second cutting member surface 72", a first cutting member end surface 74", a second cutting member end surface 76", a first cutting member side surface 78", and a second cutting member side surface 80".

The first cutting member surface 70" may form an exterior surface of the cutting tool assembly 30" and may be spaced apart from and may not engage the backing member 32". The first cutting member surface 70" may be substantially planar. For example, the first cutting member surface 70" may be coplanar with the third surface 52".

The second cutting member surface 72" may be disposed opposite the first cutting member surface 70". The second cutting member surface 72" may be substantially planar and may be disposed substantially parallel to the first cutting member surface 70". As s best shown in Figure 4B, the second cutting member surface 72" may extend from the first cutting member end surface 74" to the second cutting member end surface 76". As is best shown in Figure 4C, the second cutting member surface 72" may extend from the first cutting member side surface 78" to the second cutting member side surface 80". The second cutting member surface 72" may be disposed proximate and may engage the second surface 42" of the backing member 32". In at least one embodiment, the second cutting member surface 72" may continuously engage the second surface 42" from the first cutting member end surface 74" to the second cutting member end surface 76" and/or from the second side surface 50" to the step surface 54".

The first cutting member end surface 74" may extend from the first cutting member surface 70" to the second cutting member surface 72" and from the first cutting member side surface 78" to the second cutting member side surface 80". The first cutting member end surface 74" may be disposed at a non-perpendicular angle with respect to the first cutting member surface 70" and/or the second cutting member surface 72". The first cutting member end surface 74" may be substantially planar and may be substantially or completely disposed in the first plane 60".

The second cutting member end surface 76" may be disposed opposite the first cutting member end surface 74". The second cutting member end surface 76" may extend from the first cutting member surface 70" to the second cutting member surface 72" and from the first cutting member side surface 78" to the second cutting member side surface 80". In addition, the second cutting member end surface 76" may be disposed at a non-perpendicular angle with respect to the first cutting member surface 70", the second cutting member surface 72", and/or the first cutting member end surface 74". The second cutting member end surface 76" may be substantially planar and may be substantially or completely disposed in the second plane 62".

The first cutting member side surface 78" may extend from the first cutting member surface 70" to the second cutting member surface 72" and from the first cutting member end surface 74" to the second cutting member end surface 76". In addition, the first cutting member side surface 78" may be disposed substantially perpendicular to the first cutting member surface 70" and/or the second cutting member surface 72". The first cutting member side surface 78" may be substantially planar in one or more embodiments. The first cutting member side surface 78" may be disposed proximate and may engage the step surface 54". In at least one embodiment, the first cutting member side surface 78" may continuously engage the step surface 54" from the first cutting member end surface 74" to the second cutting member end surface 76".

The second cutting member side surface 80" may be disposed opposite the first cutting member side surface 78". The second cutting member side surface 80" may extend from the first cutting member surface 70" to the second cutting member surface 72". In addition, the second cutting member side surface 80" may be disposed substantially perpendicular to the first cutting member surface 70" and/or the second cutting member surface 72". The second cutting member side surface 80" may be substantially planar and may be disposed substantially parallel to the first cutting member side surface 78" in one or more embodiments. The second side surface 50" and the second cutting member side surface 80" may be coplanar and may be disposed completely disposed in a side plane 90". The side plane 90" may be disposed substantially parallel to the first side surface 48".

The cutting tool assembly 30" may be manufactured by providing a backing member 32" and a cutting member 34" as previously described. The backing member 32" and the cutting member 34" may be positioned such that the second cutting member surface 72" is disposed proximate or engages the second surface 42" and the step surface 54" is disposed proximate or engages the first cutting member side surface 78". The backing member 32" and the cutting member 34" may then be joined such that the cutting member 34" is fixedly positioned with respect to the backing member 32".

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A cutting tool assembly comprising:
a backing member made of a first material, the backing member including:
a first surface;
a second surface disposed opposite the first surface;
a first end surface that extends from the first surface to the second surface; and
a second end surface that is disposed opposite the first end surface and that extends from the first surface to the second surface; and
a cutting member that is fixedly disposed on the backing member and is made of a second material that differs from the first material, the cutting member including:
a first cutting member surface;
a second cutting member surface disposed opposite the first cutting member surface, wherein the second cutting member surface is disposed proximate the second surface;
a first cutting member end surface that extends from the first cutting member surface to the second cutting member surface; and
a second cutting member end surface disposed opposite the first cutting member end surface, wherein the second cutting member end surface extends from the first cutting member surface to the second cutting member surface.

2. The cutting tool assembly of claim 1 wherein a thickness of the backing member from the first surface to the second surface is greater than a thickness of the cutting member from the first cutting member surface to the second cutting member surface and wherein the first surface is substantially parallel to the second surface and the first cutting member surface is substantially parallel to the second cutting member surface.

3. The cutting tool assembly of claim 1 wherein the first end surface and the first cutting member end surface are completely disposed in a first plane, the second end surface and the second cutting member end surface are completely disposed in a second plane, and the first plane is disposed in a nonparallel relationship with the second plane.

4. The cutting tool assembly of claim 3 wherein the second cutting member surface continuously engages the second surface from the first cutting member end surface to the second cutting member end surface and the first plane and the second plane are disposed in a nonparallel relationship with the first surface and the second surface.

5. The cutting tool assembly of claim 1 wherein the backing member further comprises a third surface that is disposed opposite the first surface and a step surface that extends from the second surface to the third surface, wherein the step surface is disposed between and is spaced apart from the second end surface and the first cutting member end surface and the second cutting member end surface engages the step surface.

6. The cutting tool assembly of claim 5 wherein the step surface extends substantially perpendicular with respect to the second surface and the third surface and is disposed in a nonparallel relationship with the first cutting member end surface.

7. The cutting tool assembly of claim 5 wherein the step surface continuously engages the second cutting member end surface from the first cutting member surface to the second cutting member surface.

8. The cutting tool assembly of claim 5 wherein the backing member further comprises a first side surface and a second side surface disposed opposite the first side surface and wherein the step surface extends from the first side surface to the second side surface.

9. The cutting tool assembly of claim 1 wherein the backing member further comprises a first side surface and a second side surface disposed opposite the first side surface and the cutting member further comprises a first cutting member side surface and a second cutting member side surface disposed opposite the first cutting member side surface, wherein the first cutting member side surface is completely disposed between the first side surface and the second cutting member side surface and the second side surface and the second cutting member side surface are completely coplanar.

10. The cutting tool assembly of claim 9 wherein the backing member further comprises a third surface that is disposed opposite the first surface and a step surface that extends from the second surface to the third surface, wherein the step surface is disposed between and is spaced apart from the first side surface and the second side surface and the first cutting member side surface engages the step surface.

11. The cutting tool assembly of claim 10 wherein the second surface extends from the second side surface to the step surface.

12. The cutting tool assembly of claim 10 wherein the step surface extends from the first end surface to the second end surface.

13. The cutting tool assembly of claim 10 wherein the first side surface, the second side surface, and the step surface are disposed substantially parallel to each other.

14. A method of making a cutting tool assembly comprising:
providing a backing member made of steel, the backing member including:
a first surface;
a second surface disposed opposite the first surface;
a first end surface that extends from the first surface to the second surface; and
a second end surface disposed opposite the first end surface, wherein the second end surface extends from the first surface to the second surface;
providing a cutting member made of tungsten carbide, the cutting member including:
a first cutting member surface;
a second cutting member surface disposed opposite the first cutting member surface;
a first cutting member end surface that extends from the first cutting member surface to the second cutting member surface; and
a second cutting member end surface disposed opposite the first cutting member end surface, wherein the second cutting member end surface extends from the first cutting member surface to the second cutting member surface;
positioning the cutting member on the backing member such that the second cutting member surface is disposed proximate the second surface; and
joining the cutting member to the backing member such that the cutting member is fixedly positioned with respect to the backing member, wherein a thickness of the backing member from the first surface to the second surface is greater than a thickness of the cutting member from the first cutting member surface to the second cutting member surface.

15. The method of claim 14 wherein the cutting member is welded to the backing member or joined to the backing member by brazing.
